# NEUE EUROPÄISCHE PATENTSCHRIFT

(11) **EP 1 043 542 B2**
(45) Veröffentlichungstag und Bekanntmachung des Hinweises auf die Entscheidung über den Einspruch: **12.02.2014**
(45) Hinweis auf die Patenterteilung: 07.06.2006
(21) Anmeldenummer: 00107568.8
(22) Anmeldetag: 07.04.2000
(51) Int. Cl.: F21S 8/00, F21W 131/30, F21Y 113/00

(54) **Beleuchtungsanordnung zur Anbringung an der Decke oder einer Wand eines Raumes**
Lighting system for mounting to a room ceiling or wall
Système d' éclairage pour installation au plafond ou au mur d' une pièce

(30) Priorität: 07.04.1999 DE 29906238 U; 20.05.1999 DE 19923224
(43) Veröffentlichungstag der Anmeldung: 11.10.2000
(73) Patentinhaber: Zumtobel Lighting GmbH, 6850 Dornbirn (AT)
(72) Erfinder: Vambersky, Klaus, 6900 Bregenz (AT); Petschulat, Manfred, 6922 Wolfurt (AT)
(74) Vertreter: Schmidt-Evers, Jürgen

(56) Entgegenhaltungen:
- EP-A- 0 699 863
- EP-B- 0 272 681
- WO-A1-98//33007
- DE-A- 10 006 409
- DE-A- 19 547 747
- DE-A1- 4 433 291
- DE-C- 4 443 916
- DE-U- 29 605 207
- DE-U- 29 620 583
- DE-U- 29 823 216
- DE-U- 29 900 586
- GB-A- 1 408 955
- JP-A- 06 174 497
- US-A- 4 677 533
- US-A- 4 974 137
- US-A- 5 688 042

## Beschreibung

Die Erfindung bezieht sich auf eine Beleuchtungsanordnung nach dem Oberbegriff des Anspruchs 1.

Eine vorliegende Leuchte zur Ausleuchtung eines Raumes, insbesondere eines für den Aufenthalt von Menschen bestimmten Raumes, kann als sogenannte Einbauleuchte oder Anbauleuchte in oder an eine Wand oder Decke ein- bzw. anbaubar sein, oder sie kann als sogenannte Pendel- oder Hängeleuchte ausgebildet sein, die in einem Abstand von ihrem jeweiligen Träger aufgehängt oder befestigt ist.

Zwecks Vergrößerung der Leuchtkraft sind auch bereits Leuchten bekannt geworden, bei denen mehrere längliche Lampen parallel nebeneinander angeordnet sind, wobei jeder Lampe ein Reflektor zugeordnet ist, zwecks Verbesserung der Lichtausnutzung der Lampe und zwecks Reflexion des Lichtes in den zu beleuchtenden Raum hinein. Dabei sind auch solche Leuchten bekannt geworden, bei denen einander benachbarte Reflektoren nicht unmittelbar nebeneinander angeordnet sind, sondern einen Abstand voneinander aufweisen, in dessen Bereich sich eine Wand erstreckt, bei der es sich um ein Teil eines Gehäuses handeln kann.

Im vorliegenden Zusammenhang ist hervorzuheben, daß eine vorliegende Leuchte nicht nur den Zweck erfüllt, den vorhandenen Raum auszuleuchten, sondern sie stellt auch ein wesentliches Teil der Raumausstattung dar, das vom Betrachter sowohl dann, wenn die Leuchte eingeschaltet ist, als auch dann wenn die Leuchte ausgeschaltet ist, sichtbar ist und als Bauteil des vorhandenen Raumes insbesondere in Verbindung mit dessen Begrenzungswänden, ein den Raum und dessen Bauform bestimmendes Bauteil ist.

Eine Beleuchtungsanordnung der eingangs angegebenen Art ist in der WO 97/30309 beschrieben. Diese bekannte Beleuchtungsanordnung umfaßt drei in einem Abstand voneinander angeordnete Leuchten mit jeweils einem Reflektor, wobei zwischen den Reflektoren jeweils eine Lichtemissionsplatte angeordnet ist. In dieser Druckschrift ist nicht beschrieben, auf welche Weise das die Emissionsplatten beaufschlagende Licht erzeugt wird und zu den Lichtemissionsplatten gelangt.

In der DE 196 12 197 A ist eine Rasterleuchte als Anbauleuchte mit einem Gehäuse beschrieben, wobei ein Abstand zwischen den Seitenwänden des Reflektors und den Seitenwänden des Gehäuses durch einen Randflansch abgedeckt ist, der mit der zugehörigen Seitenwand des Reflektors verbunden ist. Im Randflansch sind Ausnehmungen in einer Längsreihe hintereinanderliegend angeordnet, in die jeweils ein Lichtleiter mit seinem einen Ende hineinragt, während sein anderes Ende die zugehörige Seitenwand des Reflektors in einer Ausnehmung durchsetzt, die sich im Bereich eines V-förmigen Querreflektors befindet, so daß an diesem Ende des Lichtleiters Licht von der Lampe der Leuchte eingekoppelt werden kann, das am anderen Ende des Lichtleiters als Akzentlicht austritt.

Durch diese bekannte Ausgestaltung werden die Lichtleistung und das Design der Beleuchtungsanordnung durch das von den Lichtleitern abgestrahlte Akzentlicht verbessert.

In der EP 0272681 B1 ist auch eine gattungsgemäße Beleuchtungsanordung beschrieben.

Der Erfindung liegt die Aufgabe zugrunde, bei einer Beleuchtungsanordnung der vorliegenden Art die Ausleuchtung der Beleuchtungsanordnung bzw. deren Lichtbild zu verbessern.

Diese Aufgabe wird durch die Merkmale der Ansprüche 1 gelöst. Vorteilhafte Weiterbildungen der Erfindung sind in den Unteransprüchen beschrieben.

Die Erfindung ermöglicht es, die angestrebte gleichmäßige bzw. vergleichmäßigte oder kontrastverminderte Ausleuchtung oder ein gleichmäßiges bzw. vergleichmäßigtes oder kontrastvermindertes Aussehen der Beleuchtungsanordnung sowohl im ausgeschalteten Zustand als auch im eingeschalteten Zustand der Leuchte zu erreichen.

Bei der erfindungsgemäßen Lösung können bei eingeschalteter Leuchte besondere Lichteffekte oder Lichtunterschiede zwischen dem von den Reflektoren abgestrahlten Licht und dem von der Lichtemissionsplatte abgestrahlten Licht dadurch erreicht werden, daß letzteres eine andere Farbe als das von der ersten Lichtquelle abgerstrahlte Licht aufweist. Dies kann dadurch erreicht werden, daß die Lichtemissionsplatte und/oder die Lichtquelle wenigstens teilweise gefärbt ist und/oder die zusätzliche Lichtquelle ein Licht unterschiedlicher Farbe abgibt als die erste Lichtquelle.

Die Lichtemissionsplatte ist opal oder perforiert.

Es auch vorteilhaft, wenn die Lichtemissionsplatte fein verteilte Partikel enthält, die eine Lichtstreuung bewirken.

Im weiteren ist es vorteilhaft, wenn die Emissionsfläche der vorzugsweise aus transparentem Material bestehenden Lichtemissionsplatte rauh ist oder eine Mikroprismenstruktur aufweist.

Nachfolgend werden die Erfindung und weitere durch sie erzielbare Vorteile anhand eines Ausführungsbeispiels und Zeichnungen näher erläutert. Es zeigen:
- Fig. 1: eine Beleuchtungsanordnung in Form einer Einbauleuchte im Querschnitt;
- Fig. 2: die Einbauleuchte in der Ansicht von unten;
- Fig. 3: ein Detail der Einbauleuchte in abgewandelter Ausgestaltung im Querschnitt;
- Fig. 4: eine Einbauleuchte im Querschnitt in weiter abgewandelter Ausgestaltung;
- Fig. 5: eine Anbauleuchte in perspektivischer Unteransicht, welche einzelne Elemente der erfindungsgemäßen Beleuchtungsanordnung aufweist;
- Fig. 6: eine erfindungsgemäße Anbauleuchte im Querschnitt, die in einem geringen Abstand zu ihrem Träger montiert ist;
- Fig. 7: eine Beleuchtungsanordnung zur Beleuchtung einer Deckenvoute im vertikalen Schnitt, die nicht erfindungsgemäß ist;
- Fig. 8: eine Lichtquelle als Einzelteil, die nicht erfindungsgemäß ist;
- Fig. 9: eine Beleuchtungsanordnung in Form einer Einbauleuchte im Querschnitt in weiter abgewandelter Ausgestaltung.

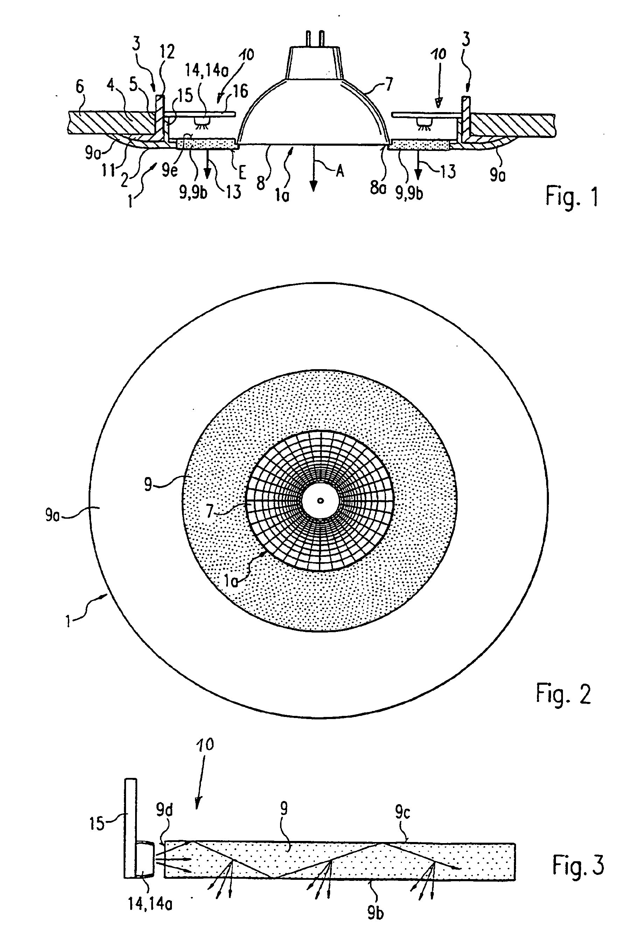

Die Beleuchtungsanordnung gemäß den Fig. 1 bis 4 ist durch eine Einbauleuchte 1 gebildet, von der in den Fig. 1 und Fig. 2 nur die Hauptteile dargestellt sind, nämlich ein allgemein mit 2 bezeichnetes Basisteil, das mittels einer Tragvorrichtung 3 am Rand 4 einer Einbauöffnung 5 in einem Träger 6 angeordnet und gehalten ist, wobei der Träger 6 beim Ausführungsbeispiel nach Fig. 1 und 2 z.B. durch eine Raumdecke gebildet sein kann. Die Einbauleuchte 1 weist eine einzige Leuchte 1a auf, die eine erste Lichtquelle, z. B. eine nicht dargestellte Lampe oder eine Fassung dafür in einem domförmigen Reflektor 7 umfaßt, der mit seinem unteren Rand eine Abstrahlöffnung 8 begrenzt, von deren Abstrahlöffnungsrand 8a sich zu beiden Seiten Lichtemissionsplatten in Form von Randteilen 9 seitlich nach außen erstrecken, die beim vorliegenden Ausführungsbeispiel flach ausgebildet sind und durch Leisten oder Scheiben gebildet sein können. Die Randteile 9 können in die Einbauöffnung 5 passen und darin versenkt angeordnet sein oder sie können auch den Rand 4 der Einbauöffnung 5 untergreifen und mittelbar oder unmittelbar am Träger 6 anliegen. Die Randteile 9 befinden sich im äußeren Randbereich der Beleuchtungsanordnung und können Außenwandteile sein. Beim vorliegenden Beispiel erstrecken sich von den Randteilen 9 äußere Randteile 9a seitlich nach außen, die den Rand 4 der Einbauöffnung 5 untergreifen. Dabei können die äußeren Randteile 9a einen Fußflansch 11 und einen aufrechten Schenkel 12 untergreifen, der Teil eines das Basisteil 2 bildenden Gehäuses oder Teil von der das Basisteil 2 tragenden Tragvorrichtung 3 sein kann, an der Haltemittel angeordnet sein können, die beim vorliegenden Beispiel den Träger 6 übergreifen (nicht dargestellt). Dabei können auch die Randteile 9 Teil des Basisteils 2 sein und den Reflektor 7 an ihren inneren Rändern tragen.

Die Randteile 9 sind teillichtdurchlässig, wobei sie perforiert sind oder aus opalem Material bestehen können, z.B. aus Kunststoff, Diffusor-Perlmaterial, mattiertem Glas usw. Hinter einer Ebene E, die die Abstrahlseite 9b der Randteile 9 enthält, ist jeweils eine Lichtquelle 14 vorgesehen, die die Randteile 9 beleuchtet, wobei diese Lichtstrahlen die Randteile 9 durchsetzen und an deren Vorderseite als Akzentlicht in den vorhandenen Raum abstrahlen, was durch Pfeile vereinfacht dargestellt ist. Das Akzentlicht 13 weist eine geringere Lichtstärke bzw. Leuchtdichte auf als die der Lampe 1a. Die Lichtquelle 14 ist durch eine Mehrzahl Leuchtdioden 14a gebildet, die in einer oder mehreren Reihen angeordnet sein können und dabei einen Teil oder die gesamte Rückseite der Randteile 9 bestrahlen können. Zur Halterung der Lichtquelle 14 oder der Dioden 14a können eine Mehrzahl einzelne oder eine gemeinsame Scheibe 15 oder Leiste vorgesehen sein, die sich in einem Abstand vom zugehörigen Randteil 9 hinter diesem befindet und durch einen winkelförmigen Tragschenkel 16 mit einem der vorbeschriebenen Randteile, hier dem äußeren Randteil 9a, verbunden und dadurch abgestützt und gehalten sein können. Hierdurch ist eine zusätzliche Beleuchtungseinrichtung 10 für Akzentlicht 13 geschaffen.

Das von der Lichtquelle 14 bzw. den Leuchtdioden 14a abgegebene Licht kann von gleicher oder unterschiedlicher Farbe sein, wie das Licht der Leuchte 1a. Wenn die Farbe des Lichts unterschiedlich ist, lassen sich vorteilhafte Lichteffekte erreichen. Dabei kann das von der Lichtquelle 14 abgegebene Licht von unterschiedlicher Farbe sein, die sich z.B. in der radialen Richtung und/oder in der Umfangsrichtung ändert. Dergleichen Lichteffekte lassen sich in vorteilhafter Weise durch eine Mehrzahl Leuchtkörper, z.B. Leuchtdioden 14, erreichen, die Licht entsprechend gleicher oder unterschiedlicher Farbe erzeugen können.

Im Rahmen der Erfindung können die wenigstens eine unterschiedliche Farbe der Randteile 9 dadurch erreicht werden, daß die Randteile 9 aus einem farbigen Material gleicher oder unterschiedlicher Farbe aufweisen oder entsprechend beschichtet sind.

Die Einbauleuchte 1 kann - längs der Abstrahlrichtung A gesehen - von unterschiedlicher Form sein, z.B. von länglicher und/oder rechteckiger Form, z.B. quadratischer, ovaler oder runder (Fig. 2) Form sein. Insbesondere dann, wenn die Form länglich ist, können mehrere stirnseitig aneinandergesetzte Einbauleuchten 1 ein Lichtband bilden. Dabei können die Randteile 9 nur zu beiden Seiten angeordnet sein oder sie können ringförmig angeordnet sein und somit einen Rahmen entsprechend der Form bilden. Dabei kann ein solcher Rahmen einteilig in Form eines Ringes oder mehrteilig in Form von Segmenten oder sich gerade erstreckenden Rahmenteilen bestehen.

Beim vorbeschriebenen Beispiel wird das Licht der Lichtquelle 14 von der Rückseite her in die Randteile 9 eingekoppelt. Im Rahmen der Erfindung wird das Licht jedoch von einer Stirnseite her, insbesondere von der Außenseite her, in die Randteile 9 eingekoppelt, wie es Fig. 3 zeigt. Bei diesem Beispiel kann der Lichtaustritt an der Vorderseite 9b des lichtdurchlässigen Randteiles 9 z.B. durch eine strukturierte vorderseitige Abstrahlfläche und/oder durch in die Randteile 9 eingebettete oder an deren Abstrahlseite 9b angeordnete Streupartikel erreicht werden. Die Vorderseite 9b kann z.B. aufgerauht sein oder eine Vielzahl kleiner Mikroflächen oder Mikroprismen aufweisen, wie es z.B. in der WO95/12782 und in der WO96/21122 beschrieben ist, auf deren Beschreibungen in vollem Umfang Bezug genommen wird. Dagegen kann die Rückseite 9e der Randteile 9 so ausgebildet sein, daß kein Lichtaustritt stattfindet, was z.B. durch Totalreflexion oder durch eine Beschichtung mit einer Reflexionsschicht erreicht werden kann. Wie bereits bei den vorbeschriebenen Beispielen kann auch das wenigstens eine Randteil 9 gemäß Fig. 3 im Bereich seines Innenrandes mit dem zugehörigen Reflektor 7 verbunden und/oder von diesem getragen sein.

Die Lichtquelle 14 kann durch eine Vielzahl von sich ein- oder mehrreihig in Umfangsrichtung erstreckenden Leuchtdioden 14a gebildet sein. Bei einer runden Leuchtenform gemäß Fig. 2 können die betreffenden Bauteile ringförmig ausgebildet sein, was auch für die Lichtquelle 14 gilt. Die breitseitige (Fig. 1) oder stirnseitige (Fig. 3) Einkoppelfläche ist jeweils mit 9d bezeichnet.

Bei den Beispielen nach Fig. 1 und 3 befindet sich jeweils die Lichtquelle 14 hinter der Abstrahlseite 9b bzw. hinter einer die Abstrahlseite bzw. -fläche 9b enthaltenden Ebene E.

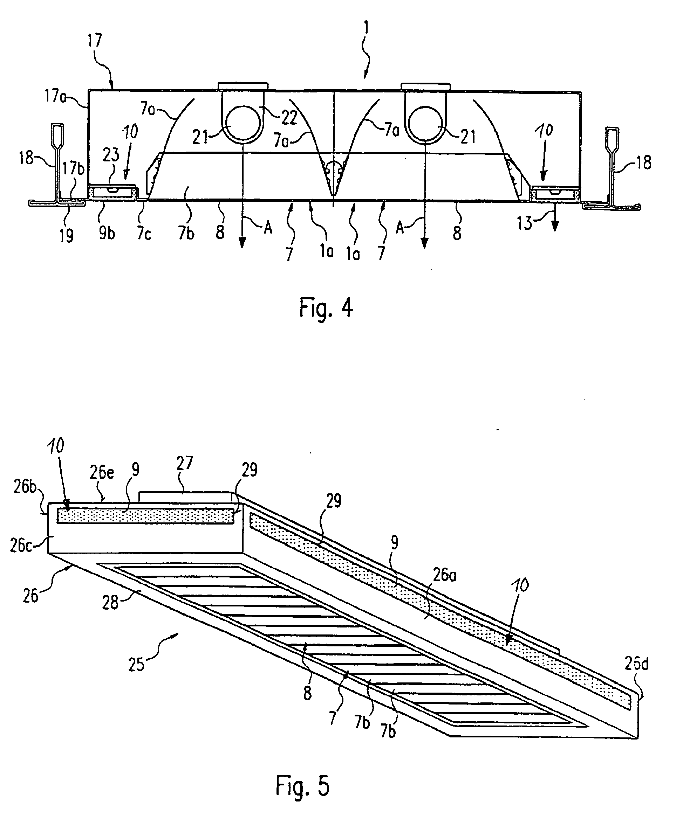

Die Leuchte 1 nach Fig. 4 unterscheidet sich von den vorbeschriebenen Beispielen in mehrfacher Hinsicht. Zum einen handelt es sich auch bei dieser Leuchte um eine Einbauleuchte 1, jedoch ist das Basisteil 2, das durch eine auf dem Kopf angeordnete sogenannte Wanne 17 gebildet ist, auf Tragschienen 18 mit horizontalen Tragschenkeln 19 angeordnet und gehalten. Die Tragschienen 18 können durch nicht dargestellte Seile, Ketten oder dgl. von einer nicht dargestellten Gebäudedecke abgehängt sein. Bei dieser Einbauleuchte 1 handelt es sich um eine sogenannte Doppelleuchte mit zwei nebeneinander angeordneten Leuchten 1a, bei denen es sich um kompakte Lampen handeln kann. Beim vorliegenden Beispiel sind die Lichtquellen durch langgestreckte Leuchtstoffröhren 21 in üblichen Fassungen 22 gebildet, wodurch sich eine längliche und insbesondere rechteckige Bauform für diese Einbauleuchte 1 ergibt. Bei dieser Ausgestaltung ist ein Reflektor 7 mit länglichen profilförmigen Reflektorseitenwänden 7a und quer dazu verlaufenden Querreflektoren 7b gebildet, wie es an sich bei Leuchtstoffröhren bzw. Gasentladungslampen bekannt ist.

Bei dieser Ausgestaltung befindet sich jeweils zwischen den Reflektoren 7 und den Tragschienen 18 oder den Seitenwänden 17a der sogenannten Wanne 17 ein flaches Randteil 9 zur Abstrahlung von Akzentlicht 13. Wie diese Ausgestaltung zeigt, können die Randteile 9 auch in der Form eines U-förmigen Profils gebildet sein, wobei die zugehörige Lichtquelle 14 an der Unterseite einer Tragleiste 23 befestigt sein kann, die auf den aufrechten Stegen des U-förmigen Tragteils 9 aufliegt und darauf befestigt sein kann. Das Randteil 9 kann mit der Tragleiste 23 ein vorfertigbares Profil bilden. Zur Verbesserung der Anlage bzw. des Abschlusses jeweils zwischen dem Randteil 9 und der benachbarten Reflektorseitenwand 7a kann letztere an ihrem unteren Rand einen abgewinkelten Randschenkel 7c aufweisen, an dem das Randteil 9 mit seiner Schmalseite anliegt, und der durch einen horizontalen und einen nach oben abstehenden Schenkel gebildet sein kann. Der untere Rand der betreffenden Reflektorseitenwand 7a und der Seitenwand 17a befinden sich mit der Abstrahlseite 9b etwa in der gleichen Höhe. Zur Abstützung auf den Tragschenkeln 19 kann die Seitenwand 17a an ihrem unteren Rand ebenfalls einen abgewinkelten Tragschenkel 17b aufweisen, der zu seiner Stabilisierung an seinen freien Rand abgewinkelt sein kann, sich bis zum Mittelsteg der Tragschiene 18 erstrecken kann, wodurch die Einbauleuchte 1 in der Querrichtung der Tragschienen 18 zwischen diesen positioniert ist, und auf den Tragschenkel 19 aufliegt. Auf dem anderen Tragschenkel 19 der jeweiligen Tragschiene 18 kann eine benachbarte Einbauleuchte 1 oder ein Deckenelement aufliegen.

Zwischen den beiden Leuchten 1a grenzen die unteren Ränder der zugehörigen Reflektorseitenwände 7a direkt aneinander, wobei sie ein einstückiges gemeinsames V-förmiges Reflektorseitenwandteil bilden können. Jedoch kann auch zwischen diesen beiden Reflektorseitenwänden 7a ein Randteil 9 für Akzentlicht 13 angeordnet sein. Auch beim Beispiel nach Fig. 4 kann die Lichtquelle 18 durch ein längliches Band oder durch eine Vielzahl von Dioden 14a gebildet sein, die in einer oder in mehreren, sich in der Umfangsrichtung erstreckenden Reihen angeordnet sein können.

Der bzw. die Reflektoren 7 und deren Einzelteile können aus Aluminium bestehen, wodurch deren Oberflächen, insbesondere die vom zu beleuchtenden Raum her sichtbaren Oberflächen, insbesondere der Randschenkel 7c, eine silberne bzw. helle Farbe erhalten. Im Rahmen der Erfindung können die vom Raum her sichtbaren Flächen des oder der Reflektoren 7 oder nur die Flächen der Randschenkel 7c eine weiße Farbe aufweisen, die z. B. durch eine Beschichtung oder Lackierung aufgebracht ist.

Beim Beispiel nach Fig. 5, bei dem gleiche oder vergleichbare Teile ebenfalls mit gleichen Bezugszeichen versehen sind, ist die Beleuchtungsanordnung durch eine Anbauleuchte 25 gebildet, die direkt an eine nicht dargestellte Wand oder Decke anbaubar ist oder durch Zugbänder, Ketten oder Pendel im Sinne einer sogenannten Pendelleuchte abgehängt sein kann. Bei vorliegenden Beispiel ist diese Leuchte 25 ebenfalls länglich ausgebildet, und sie weist ein kastenfömiges Gehäuse 26 mit jeweils zwei einander gegenüberliegenden Seitenwänden 26a, 26b, 26c, 26d auf, das oberseitig vorzugsweise durch eine Oberwand 26e verschlossen ist und einen von den Seitenrändern zurückspringenden Oberkasten 27 aufweisen kann. Das Gehäuse ist flach ausgebildet, so daß seine Höhe geringer ist als seine Breite und Länge. Auf der den Oberkasten 27 gegenüberliegenden Breitseite des Gehäuses 26 befindet sich im Bereich von wenigstens einer Leuchte 1a ein Reflektor 7 mit an sich bekannten Querreflektoren 7b im Bereich einer Abstrahlöffnung 8. Die Abstrahlöffnung 8 kann den Abmessungen dieser hier unteren Breitseite entsprechen oder kleiner bemessen sein und von den Umfangsrändern einen Abstand aufweisen, so daß sich ein umlaufender Unterwandrandstreifen 28 ergibt. Im Gehäuse 26 befinden sich im Bereich des wenigstens einen Reflektors 7 wenigstens eine Fassung 22 und eine Lampe 21, wie es an sich üblich ist.

Bei dieser Leuchte 25 sind ebenfalls Akzentlicht 13 abstrahlende Randteile 9 vorhanden, die sich am Außenrand des eine Verkleidung für die Leuchte 25 bildenden Gehäuses 26 befinden. Dabei können die Randteile 9 nur an einer oder an zwei einander gegenüberliegenden Seiten des Gehäuses 26 oder an allen vier Seiten angeordnet sein. Für im Sinne eines Lichtbandes hintereinander angeordnete Leuchten 25 sind an beiden Seiten des Lichtbands angeordnete Randteile 9 vorteilhaft und ausreichend. Die Randteile 9 sind vorzugsweise durch Ausnehmungen 29 in den zugehörigen Gehäusewänden, hier in den Seitenwänden 26a, 26b, 26c, 26d, von außen sichtbar, wobei sie sich im Gehäuse oder in den Ausnehmungen 29 befinden. Wie Fig. 5 zeigt sind sich im wesentlichen über die gesamte Länge der jeweiligen Seitenwand erstreckende Ausnehmungen und Formteile 9 längsstreifenförmig vorgesehen. Im Rahmen der Erfindung können jedoch auch eine Mehrzahl kürzerer Formteile 9 mit zugehörigen Ausnehmungen 29 hintereinanderliegend oder in bestimmten Mustern vorgesehen sein. Die Halterung der Randteile 9 kann durch Führungen oder Fassungen und zugehörigen Sicherungen vorzugsweise formschlüssig ausgebildet sein. Dabei können Randteile 9 gemäß Fig. 1, Fig. 3 oder Fig. 4 mit zugehörigen Lichtquellen 14 zum Einsatz kommen, wobei erfindungsgemäß Randteile gemäß Fig. 3 verwendet werden.

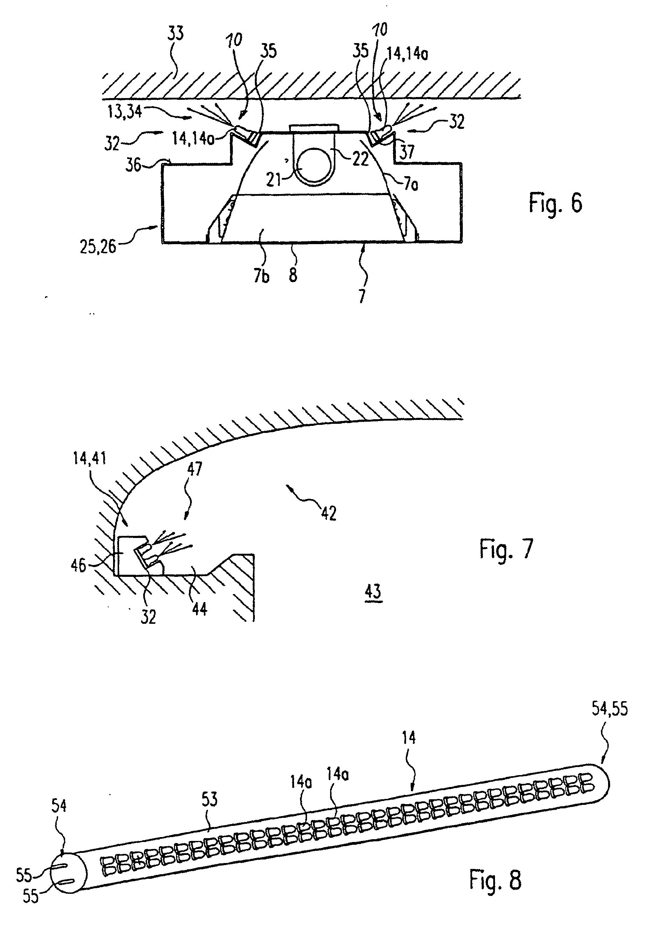

Bei der erfindungsgemäßen Ausgestaltung nach Fig. 6 ist eine Leuchte 25 vorgesehen, deren Grundform der Leuchte gemäß Fig. 5 etwa entspricht, jedoch kommt hier, gemäß der Erfindung zusätzlich zur Akzentbeleuchtung nach Fig. 5 eine indirekte Beleuchtung zum Einsatz. Bei dieser Ausgestaltung sind in beiderseitigen Freiräumen 32 zwischen dem Leuchtengehäuse 26 und seinem Träger 33, z.B. eine Decke, Lichtquellen 14 von einem Standpunkt vor der Leuchte 25 her verdeckt angeordnet, deren gegen den Träger 33 abgestrahltes Licht 34 die indirekte Beleuchtung bewirkt. Bei der Ausgestaltung nach Fig. 6 sind an der Oberseite des Oberkastens 27 in der Längsrichtung der vorzugsweise länglich ausgebildeten Leuchte 25 verlaufende Vertiefungen 35 vorgesehen, die z.B. durch Einbiegungen der oberen Seitenwand des Oberkastens 29 gebildet sein können. In diesen Vertiefungen 35 ist jeweils die vorzugsweise längliche Lichtquelle 14 angeordnet. Sie ist durch eine Mehrzahl von in einer oder in zwei längs verlaufenden Reihen angeordneten Dioden 14a gebildet. Die Lichtquellen 14 können jedoch auch im Bereich der durch das Vorhandensein des verjüngten Oberkastens 27 gebildete Ausnehmungen 36 im Gehäuse 26 angeordnet sein. Wenn die Leuchte 25 in einem Abstand vom Träger 33 angeordnet ist, z.B. aufgehängt ist, können die Lichtquellen 14 oder kann eine gemeinsame Lichtquelle 14 auch ggf. mittig zwischen dem Gehäuse 26 und dem Träger 33 angeordnet sein. Bei dieser Ausgestaltung ist das durch die indirekte Beleuchtung erzeugte Akzentücht ebenfalls mit 13 bezeichnet, wobei es von der betreffenden Fläche des Trägers 33 zumindest teilweise reflektiert werden kann.

Die Dioden 14a sind vorzugsweise auf einer Tragleiste 37 angeordnet und dabei elektrisch versorgt, z.B. durch längs in oder an der Tragleiste 37 zu einem elektrischen Anschluß der Tragleiste 37 verlaufende elektrische Leitungen.

In Fig. 7 ist eine längliche Lichtquelle 14 in Form einer Leuchte 41 zur Beleuchtung einer Deckenvoute 42 vorgesehen, die vom zu beleuchtenden Raum 43 her möglichst verdeckt im Freiraum 44 der Deckenvoute 42 angeordnet ist. Es handelt sich um eine längliche Leuchte, deren Lampe z.B. durch ein Gasentladungsrohr oder vorzugsweise durch eine Mehrzahl Leuchtdioden 14 gebildet ist, die in einer oder mehreren, z.B. zwei, Reihen nebeneinander an in der Längsrichtung der Deckenvoute 42 verlaufenden Tragleisten 37 angeordnet sind, die in schräger Anordnung auf einer Basisleiste 46 oder auf mehreren hintereinander angeordneten Basisstücken in der Position angeordnet sind, in der das Licht 47 dieser Lichtquelle 14 schräg aus der Deckenvoute 42 in den Raum hineinstrahlt.

Fig. 8 zeigt eine Lichtquelle 14 bzw. eine Lampenanordnung 51 mit einer Mehrzahl Leuchtdioden 14a, die an einer länglichen, sich vorzugsweise gerade erstreckenden Tragstange 53 in einer oder mehreren, z.B. zwei längs verlaufenden Reihen angeordnet sind. Die Tragstange 53 weist mit der Röhre einer Leuchtstofflampe vergleichbare Abmessungen und einen oder zwei elektrische Anschlüsse 54 auf, so daß die Tragstange 53 hier mit jeweils zwei an den Stirnseiten abstehenden Kontaktstiften 55 zu üblichen Steckfassungen für Röhren-Leuchtstofflampen passen und somit mit den Steckfassungen verbindbar sind. Bei einer Lampe 56 dieser Ausgestaltung handelt es sich somit um einen Röhren-Leuchtstofflampen-Ersatz, wobei ein wahlweiser Austausch stattfinden kann.

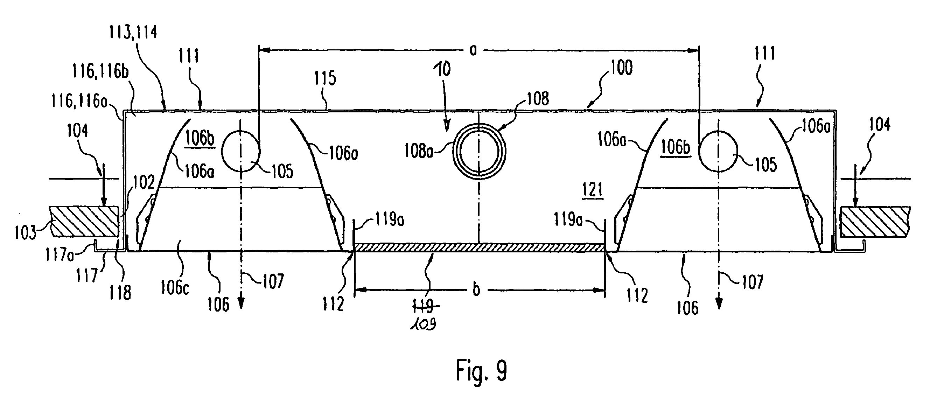

Beim Beispiel nach Fig. 9 ist eine Leuchte 100 als Einbauleuchte ausgebildet, die in eine Einbauöffnung 102 einer Wand oder im vorliegenden Fall einer Decke oder Zwischendecke 103 einbaubar ist. Es ist jedoch auch möglich, die Leuchte 100 als sogenannte Anbauleuchte oder Hängeleuchte auszubilden.

Die Hauptteile der Leuchte 100 sind eine Haltevorrichtung 104, mit der die Leuchte 100 in der Einbauöffnung 102 fixierbar ist, zwei Lampen 105, denen jeweils ein Reflektor 106 zugeordnet ist, der das von der zugehörigen Lampe 105 erzeugte Licht in die Abstrahlrichtung 107 reflektiert, die sich in den zu beleuchtenden Raum hinein erstreckt, wobei zwischen den Lampen 105 und den Reflektoren 106 jeweils ein sich quer zur Abstrahlrichtung 107 erstreckender Abstand a, b vorhanden ist, eine weitere, sich zwischen den Lampen 105 bzw. den Reflektoren 106 angeordnete Lampe 108, ein zwischen den Lampen 105 bzw. den Reflektoren 106 angeordnetes Lichtbeeinflussungselement oder -mittel 109, z. B. in Form einer Lichtemissionsplatte, das wenigstens teilweise lichtdurchlässig ist für ein an seiner Rückseite vorhandenes Licht, beim vorliegenden Ausführungsbeispiel für das Licht der zusätzlichen Lampe 108, und jeweils zugehörige Befestigungsvorrichtungen 111, 112, vorzugsweise Verrastungsvorrichtungen, mit denen die Reflektoren 106 und das Lichtbeeinflussungselement oder -mittel 109 an der Leuchte 100 oder einem Basisteil 113 der Leuchte 100 gehalten sind.

Das Basisteil 113 ist beim vorliegenden Beispiel durch eine sogenannte Leuchtenwanne 114 in Form eines auf dem Kopf stehenden Topfes mit einer Deckenwand 115 und einer Umfangswand 116 gebildet, wobei vom freien Rand der Umfangswand 116 ein Flanschteil 117 quer abstehen kann, vorzugsweise mit einem zurückstehenden Schenkel 117a, das den Einbauspalt 118 zwischen dem Basisteil 113 oder den Reflektoren 106 und dem Rand der Einbauöffnung 102 untergreift und abdeckt. Bei der Haltevorrichtung 104 kann es sich um eine an sich bekannte Haltevorrichtung handeln, und deshalb ist sie beim vorliegenden Ausführungsbeispiel nur schematisch durch einen auf jeder Seite angeordneten Pfeil mit einem seitlich abstehendem Halteelement verdeutlicht.

Beim vorliegenden Beispiel ist die Leuchte 100 von länglicher Bauweise, wobei ihre in der Figur sichtbare Breite geringer als ihre nicht sichtbare, sich rechtwinklig zur Zeichnungsebene erstreckende Länge, die ein mehrfaches ihrer Breite beträgt, so daß die Leuchte 100 - entgegen der Abstrahlrichtung 107 gesehen - eine rechteckige Form aufweist. Die Umfangswand 116 besteht somit jeweils aus zwei einander parallel gegenüberliegenden, sich längs erstreckenden ebenen Seitenwänden 116a und zwei einander parallel gegenüberliegenden, sich rechtwinklig zu den Seitenwänden 116a erstreckenden ebenen Seitenwänden 116b. Die Lampen 106, sind durch Gasentladungslampen in Form von sich vorzugsweise gerade erstreckenden üblichen Röhren aus lichtdurchlässigem Material, insbesondere Glas, gebildet, wobei sie an nicht dargestellten Fassungen in an sich bekannter Weise einsteckbar sind, die an der Deckenwand 115 oder an den stirnseitigen Seitenwänden 116b befestigt sein können.

Die beiden vorzugsweise einander gleich ausgebildeten Reflektoren 6 sind ebenfalls in an sich bekannter Weise durch zwei einander gegenüberliegende, sich längs erstreckende, in die Abstrahlrichtung 107 divergent angeordnete Reflektorseitenwände 106a gebildet, die mit dazu quer angeordneten Reflektorstirnwänden 106b eine Kastenform bilden können, wobei sich zwischen den Reflektorseitenwänden 106a jeweils einen Längsabstand voneinander aufweisende, im vertikalen Schnitt V-förmige Querreflektoren 106c erstrecken, wie es ebenfalls an sich bekannt ist. Von den dem zu beleuchtenden Raum zugewandten Seitenrändern der Reflektorseitenwände 106a erstrecken sich jeweils Randschenkel 119, die winkel- oder U-förmig von den Reflektorseitenwänden 106a abstehen. Bei einer U-Form können die Randschenkel 119 mit in den Hohlraum 121 der ein Gehäuse bildenden Gehäusewanne 114 zurückragenden Endschenkeln 119a ausgebildet sein. Beim vorliegenden Beispiel sind die sich neben dem Lichtbeeinflussungsmittel 109 erstreckenden Endschenkel 119a mit einer größeren Länge ausgebildet, als die gegenüberliegenden äußeren Endschenkel, so das sie tiefer in den Hohlraum 121 hineinragen.

Das Lichtbeeinflussungsmittel 109 ist beim vorliegenden Beispiel ein plattenförmiges Teil aus lichtdurchlässigem Material, wie z. B. Glas oder Kunststoff, gebildet, das sich z. B. über den gesamten freien Raum zwischen den Lampen 105 oder den Reflektoren 106 erstrecken kann, wenn letztere nicht nur außenseitig, sondern auch innenseitig Reflektorseitenwände 106a aufweisen. Vorzugsweise ist das Lichtbeeinflussungsmittel 109 durch eine insbesondere ebene Scheibe gebildet. Das Lichtbeeinflussungsmittel 109 läßt sich von der offenen Seite des Basisteils 113 her montieren und durch die im einzelnen nicht dargestellte Befestigungsvorrichtung 112 fixieren.

Die vom zu beleuchtenden Raum her sichtbaren Außenflächen der Beleuchtungsanordnung weisen vorzugsweise eine helle Farbe auf. Dies kann z. B. dadurch erreicht werden, daß wenigstens diese Außenflächen mit einer weißen Farbe beschichtet oder lackiert sind. Eine andere Maßnahme kann darin bestehen, die diese Flächen aufweisenden Teile aus Aluminium zu fertigen, wodurch wenigstens die vorgenannten sichtbaren Außenflächen eine helle bzw. silberne Farbe erhalten. Dies gilt insbesondere für die vom zu beleuchtenden Raum her sichtbaren Teile. Beim Beispiel nach Fig. 1 handelt es sich hier z. B. um die äußeren Randteile 9a bzw. den sichtbaren Teil des Basisteils 2 bzw. einer z. B. sichtbaren Tragvorrichtung 3. Beim Beispiel nach Fig. 3 kann es sich hierbei um die Scheibe oder Leiste 15 einschließlich einer die Dioden 14a tragenden Leiste handeln. Beim Beispiel nach Fig. 4 können z. B. die Tragschenkel 19 und die Randschenkel 7c entsprechend ausgebildet sein. Beim Beispiel nach Fig. 5 kann es sich bei diesen Teilen um die sichtbaren Flächen des Gehäuses 26 handeln, insbesondere um die Seitenwände 26c und die Unterwandrandstreifen 28. Beim Beispiel nach Fig. 9 kann es sich bei diesen Teilen um die Flanschteile 117 und die Schenkel 117a der Leuchtenwanne 114 sowie um die Randschenkel 119 der Reflektoren 106 handeln. Es ist vorteilhaft, wenigstens die Abstrahlfläche des Lichtbeeinflussungsmittels 109 mit einer Farbe auszubilden, die im wesentlichen der Farbe der vorbeschriebenen sichtbaren Teile entspricht und z. B. silbern oder vorzugsweise weiß ist. Dies hat den Vorteil, daß dann, wenn die wenigstens eine Leuchte ausgeschaltet ist, die sichtbaren Teile eine gleichmäßige bzw. vergleichmäßigte und somit gleiche oder kontrastarme Farbe aufweisen, wodurch das Aussehen der Beleuchtungsanordnung bzw. Leuchte verbessert ist. Das gleiche vorteilhafte Lichtbild läßt sich auch dann erreichen, wenn die wenigstens eine Leuchte eingeschaltet ist, d. h. wenn sie Licht abstrahlt, wobei das Licht der ersten und zweiten Lichtquellen bzw. Lampen eine gleiche Farbe aufweisen kann. In diesem Falle wird bei gleicher Lichtfarbe das Lichtbild durch die Beleuchtung des Lichtbeeinflussungsmittels 109 bzw. der Lichtemissionsplatte vergleichmäßigt und verbessert. Wenn dagegen das vom Lichtbeeinflussungsmittel 109 bzw. von der Lichtemissionsplatte abgestrahlte Licht sich hinsichtlich seiner Farbe von der Farbe des Lichtes der wenigstens einen Leuchte unterscheidet, wird das Akzentlicht durch die unterschiedliche Färbung optisch hervorgehoben und dadurch das Lichtbild bzw. das Aussehen der Beleuchtungsanordnung bzw. der Leuchte zusätzlich verbessert. Das Akzentlicht ist vorzugsweise blau oder bläulich.

Da das Material des Lichtbeeinflussungsmittels 109 lichtdurchlässig ist und dabei durchscheinend (opal) ist findet auch im Bereich des Lichtbeeinflussungsmittels 109 eine Lichtabstrahlung in der Abstrahlrichtung 107 statt, wobei das von der weiteren Lampe 108 erzeugte und somit im Hohlraum 121 rückseitig vom Lichtbeeinflussungsmittel 109 vorhandene Licht das Lichtbeeinflussungsmittel 109 durchstrahlt. Je nach dem Grad der Lichtdurchlässigkeit des Lichtbeeinflussungsmittels 109 und/oder durch besondere Oberflächenstrukturen in und/oder an der Innen- und/oder Außenseite des Lichtbeeinflussungsmittel 109 und/oder durch eine bezüglich des Lichtes der Lampen 105 unterschiedliche Farbe des Lichts der Lampe 108 und/oder durch eine Färbung der Lampe 108 bzw. ihrer Röhre und/oder des Lichtbeeinflussungsmittels 109 lassen sich unterschiedliche und jeweils individuell bestimmbare Lichteffekte erreichen. besondere Lichteffekte erzeugen, die das Aussehen der Leuchte 100 verbessern. Es wird jedoch nicht nur das Aussehen der Leuchte verbessert, sondern die Anordnung des Lichtbeeinflussungsmittels 109 führt auch zu einer wenigstens teilweisen Beleuchtung bzw. Erhellung der sich zwischen den Lampen 105 bzw. zwischen den Reflektoren 106 befindlichen, vom Lichtbeeinflussungsmittel 109 in seiner Flächengröße vorgegebenen Leuchtenzone, die ohne eine solche Ausleuchtung als dunkle bzw. kontraststarke Zone in Erscheinung tritt und als unzureichende Ausleuchtung und störende Zone in Erscheinung tritt.

Es ist außerdem vorteilhaft, die Lampen 105 und die Lampe 108 getrennt schaltbar auszubilden, so daß wahlweise die Lampen 105 und/oder die weitere Lampe 108 ein- bzw. ausschaltbar ist bzw. sind. Darüber hinaus ist es vorteilhaft, durch jeweils einen nicht dargestellten Dimmer die Lichtstärke der Lampen 105 und/oder die weitere Lampe 108 dimmbar zu machen.

Die Färbung der Lampe 108 bzw. des davon abgestrahlten Lichtes kann z. B. dadurch erreicht werden, daß der Lampenkörper, hier eine Röhre, aus einem lichtdurchlässigen und eingefärbten Material, insbesondere Glas, besteht oder von einer lichtdurchlässigen gefärbten Schicht 108a umgeben ist, bei der es sich auch um eine Hülle handeln kann, die z. B. durch eine Farbfolie oder einen aufgezogenen Schlauch, z. B. einen Schrumpfschlauch, gebildet sein kann. Diese Merkmale gelten auch für das Lichtbeeinflussungsmittel 109, wobei dieses nicht umhüllt sein muß, sondern die farbige Schicht braucht sich nur auf der Innen- und/oder Außenseite des Lichtbeeinflussungsmittels 109 zu befinden.

Besondere Oberflächenstrukturen und/oder Lichteffekte werden auch dann erreicht, wenn das Leuchtmittel, hier die Lampe 108 bzw. deren Röhre und/oder das Lichtbeeinflussungsmittel 109 aus lichtdurchlässigem oder teillichtdurchlässigem texturiertem Kunststoff-Gewebe bestehen und/oder nur einen diffusen oder opalen Lichtdurchgang ermöglichen und/oder eine sogenannte Diffusorperl-Struktur wenigstens an der Innen- und/oder Außenseite aufweisen. Insbesondere dann, wenn das Leuchtmittel und/oder das Lichtbeeinflussungsmittel 109 aus Glas bestehen, führt auch ein satiniertes bzw. an seiner Oberfläche aufgerauhtes Glas zu einem vorteilhaften Lichteffekt.

Es zeigt sich somit, daß das eine Abdeckung, insbesondere eine Diffusorperl-Abdeckung, bildende Lichtbeeinflussungsmittel 109 und/oder die Lampe 108 je nach Ausgestaltung mit den vorbeschriebenen Merkmalen eine vorteilhafte Stimmungsbeleuchtung ermöglicht bzw. ermöglichen.

Eine Diffusorperl-Struktur bzw. -Abdeckung ist besonders vorteilhaft, weil sie bei ausgeschaltetem Licht der Leuchte eine weiße bzw. silberne oder metallische und bei eingeschaltetem Licht eine jeweils entsprechend der Färbung farbige Sichtfläche für das Lichtbeinflussungselement 109 ergibt. Diese Ausgestaltung eignet sich insbesondere für weiße Leuchten oder Leuchten heller Farbe.

Es ist auch möglich, die weitere Lampe 108 wegzulassen und das Lichtbeeinflussungsmittel 109 rückseitig mit dem Licht einer oder beider Lampen 105 zu beleuchten, das z. B. durch nicht dargestellte Öffnungen in den inneren Seitenwänden 106a in den Innenraum 121 gelangen kann.

Jeder Lichtquelle 14 ist ein elektrisches Anschlußmittel für den elektrischen Anschluß der zugehörigen Diode oder Dioden 14a zugeordnet, an die die Lichtquelle 14 angeschlossen oder anschließbar ist. Diese elektrischen Anschlußmittel sind aus Vereinfachungsgründen in den Zeichnungen nicht dargestellt.

Für die Emission des Akzentlichts gibt es mehrere Möglichkeiten. Das Randteil bzw. das Lichtbeeinflussungsmittel 109 kann perforiert sein. Es kann aus durchscheinendem bzw. opalem Material bestehen, wobei in diesem Falle die Lichtquelle 14 vorzugsweise hinter dem Randteil 9 bzw. dem Lichtbeeinflussungsmittel 109 angeordnet ist. Wenn die Lichtquelle sich seitlich oder an der Schmalseite des Randteils 9 bzw. Lichtbeeinflussungsmittels 109 gemäß Fig. 3 befindet, weist das Randteil 9 bzw. das Lichtbeeinflussungsmittel 109 vorzugsweise ein völlig lichtdurchlässiges Material auf, wobei es das Licht vorzugsweise bei Totalreflexion leitet und an der Abstrahlfläche 9d als diffuses Akzentlicht abstrahlt.

## Patentansprüche

1. Beleuchtungsanordnung zur Anbringung an der Decke oder einer Wand eines Raumes als ihrem Träger, umfassend eine Tragvorrichtung (3; 104) mit einem Leuchtengehäuse (26), mindestens
eine von der Tragvorrichtung (3; 104) gehaltene Leuchte (1a; 100), die ihrerseits eine erste Lichtquelle enthält oder zur Aufnahme einer solchen ausgebildet ist, und die einen Reflektor (7; 106) aufweist,
wobei eine zusätzliche Beleuchtungseinrichtung (10) vorgesehen ist, welche eine Mehrzahl Leuchtdioden (14a) aufweist und das Licht (13) außerhalb einer durch den Reflektor (7; 106) bestimmten Abstrahlöffnung (8; b) für das von der ersten Lichtquelle abgestrahlte Licht abstrahlt,
**dadurch gekennzeichnet,**
**daß** die Leuchtdioden (14a) an der der Decke oder der Wand zugewandten Seite des Leuchtengehäuses (26) in einem Freiraum zwischen dem Leuchtengehäuse (26) und seinem Träger (33) zur Erzeugung einer indirekten Beleuchtung angeordnet sind, und
**daß** die Beleuchtungsanordnung neben dem Reflektor (7; 106), an einer oder an einander gegenüberliegenden oder an allen Seitenwänden (26a, 26b 26c 26d) des Leuchtengehäuses (26) eine oder mehrere sich in Umtangsrichtung erstreckende, opale oder perforierte Lichtemissionsplatte bzw. Lichtemissionsplatten (9; 109) aufweist,
wobei seitlich der Emissionsplatte bzw. Emissionsplatten (9b) jeweils mindestens eine durch eine oder mehrere Leuchtdioden (14a) gebildete weitere Lichtquelle (14; 108) zur Erzeugung eines Akzentlichts angeordnet ist, deren Licht von einer Stirnseite her in die Emissionsplatte (9b) eingekoppelt wird.

2. Beleuchtungsanordnung nach Anspruch 1,
**dadurch gekennzeichnet,**
**daß** die Leuchtdioden (14a) an einer Tragstange (53) angeordnet sind, die an ihren Enden elektrische Kontaktelemente (55) aufweist, die in ihrer Größe und Abmessungen den Abmessungen der Kontaktelemente von Leuchtstoffröhren entsprechen.

3. Beleuchtungsanordnung nach Anspruch 1 oder 2,
**dadurch gekennzeichnet,**
**daß** die Lichtemissionsplatte bzw. Lichtemissionsplatten (9) aus Glas oder Kunststoff bestehen.

4. Beleuchtungsanordnung nach einem der vorherigen Ansprüche,
**dadurch gekennzeichnet,**
**daß** die Lichtemissionsplatte bzw. Lichtemissionsplatten (9; 109) oder deren Emissionsfläche bzw. Emissionsflächen (9b) eine Farbe aufweisen, die der Farbe von ihr benachbarten Teilen der Beleuchtungsanordnung und/oder der Tragvorrichtung (3; 104) und/oder des Reflektors (7; 106) und/oder des Gehäuses (26; 114) ähnlich ist oder im wesentlichen entspricht, und/oder eine weiße Farbe aufweist.

5. Beleuchtungsanordnung nach einem der vorherigen Ansprüche,
**dadurch gekennzeichnet,**
**daß** das von der Lichtemissionsplatte bzw. den Lichtemissionsplatten (9) abgestrahlte Licht eine andere Farbe aufweist als das Licht der ersten Lichtquelle, insbesondere eine blaue oder bläuliche Farbe aufweist.

6. Beleuchtungsanordnung nach einem der vorherigen Ansprüche,
**dadurch gekennzeichnet,**
**daß** das Licht der weiteren Lichtquelle (14) für die Akzentbeleuchtung und/oder das Material oder eine Materialschicht der Lichtemissionsplatte bzw. Lichtemissionsplatten (9) oder der weiteren Lichtquelle (14) für die Akzentbeleuchtung eine von etwa weißem Licht abweichende Farbe aufweist bzw. aufweisen.

## Claims

1. Illumination arrangement for mounting on the ceiling or a wall of a room as its carrier, including a carrier device (3; 104) with a luminaire housing (26), at least one luminaire (1a; 100) which is held by the carrier device (3; 104), for its part contains a first light source or is configured to receive such a first light source and has a reflector (7; 106),
wherein an additional illumination means (10) is provided which has a plurality of light-emitting diodes (14a) and radiates the light (13) outside an emission opening (8; b), determined by means of the reflector (7; 106) for the light emitted from the first light source,
**characterized in that**
the light-emitting diodes (14a) are arranged on the side of the luminaire housing (26) towards the ceiling or the wall in a free space between the luminaire housing (26) and its carrier (33), for generating indirect illumination, and
**in that** the illumination arrangement has an opal or perforated light emission plate or a plurality of opal or perforated light emission plates (9; 109), extending in the peripheral direction, next to the reflector (7; 106) on one or on opposing or on all side walls (26a, 26b, 26c, 26d) of the luminaire housing (26), wherein arranged to the side of the emission plate or emission plates (9b) there is in each case at least one further light source (14; 108), formed by means of one or a plurality of light-emitting diodes (14a), for the generation of an accent light, the light of which is coupled into the emission plate (9b) from an end face.

2. Illumination arrangement according to claim 1, **characterized in that**
the light-emitting diodes (14a) are arranged on a carrier rod (53) which at its ends has electrical contact elements (55) which correspond in terms of their size and dimensions to the dimensions of the contact elements of fluorescent tubes.

3. Illumination arrangement according to claim 1 or 2, **characterized in that**
the light emission plate or light emission plates (9) is/are of glass or plastic.

4. Illumination arrangement according to any preceding claim,
**characterized in that**
the light emission plate or light emission plates (9; 109) or the emission surface or emission surfaces (9b) thereof has/have a colour which is similar to or in substance corresponds to the colour of neighbouring parts of the illumination arrangement and/or of the carrier device (3; 104) and/or of the reflector (7; 106) and/or of the housing (26; 114), and/or has a white colour.

5. Illumination arrangement according to any preceding claim,
**characterized in that**
the light emitted from the light emission plate or light emission plates (9) has a different colour than the light of the first light source, in particular a blue or bluish colour.

6. Illumination arrangement according to any preceding claim,
**characterized in that**
the light of the further light source (14) for the accent illumination and/or the material or a material layer of the light emission plate or light emission plates (9) or the further light source (14) for the accent illumination has or have a colour deviating from approximately white light.

## Revendications

1. Ensemble d'éclairage destiné à être installé au plafond ou au niveau d'un mur d'une pièce comme support, comprenant un dispositif de support (3 ; 104) doté d'un boîtier de lampe (26),
au moins une lampe (1a ; 100) maintenue par le dispositif de support (3 ; 104), qui comporte de son côté une première source de lumière ou qui est réalisée pour loger une telle source de lumière, et qui présente un réflecteur (7 ; 106),
sachant qu'un système d'éclairage (10) supplémentaire est prévu, lequel présente une pluralité de diodes électroluminescentes (14a) et qui rayonne la lumière (13) à l'extérieur d'une ouverture de rayonnement (8 ; b) déterminée par le réflecteur (7 ; 106) pour la lumière rayonnée par la première source de lumière,
**caractérisé en ce**
**que** les diodes électroluminescentes (14a) sont disposées au niveau du côté, tourné vers le plafond ou le mur, du boîtier de lampe (26) dans un espace dégagé entre le boîtier de lampe (26) et son support (33) pour produire un éclairage indirect, et
en ce que l'ensemble d'éclairage présente, à côté du réflecteur (7 ; 106), au niveau d'un côté latéral ou des côtés latéraux opposés les uns aux autres ou au niveau de tous les côtés latéraux (26a, 26b, 26c, 26b) du boîtier de lampe (26), une plaque d'émission de lumière ou plusieurs plaques d'émission de lumière (9 ; 109) opales ou perforées s'étendant dans le sens de la périphérie,
sachant que respectivement au moins une autre source de lumière (14 ; 108) formée par une ou plusieurs diodes électroluminescentes (14a) et servant à produire une lumière d'accentuation est disposée sur le côté de la plaque d'émission ou des plaques d'émission (9b), la lumière de ladite source de lumière supplémentaire étant injectée depuis un côté frontal dans la plaque d'émission (9b).

2. Ensemble d'éclairage selon la revendication 1,
**caractérisé en ce**
**que** les diodes électroluminescentes (14a) sont disposées au niveau d'une barre de support (53), qui présente au niveau de ses extrémités des éléments de contact (55) électriques, dont la taille et les dimensions correspondent aux dimensions des éléments de contact de tubes fluorescents.

3. Ensemble d'éclairage selon la revendication 1 ou 2,
**caractérisé en ce**
**que** la plaque d'émission de lumière ou les plaques d'émission de lumière (9) sont constituées de verre ou de matière plastique.

4. Ensemble d'éclairage selon l'une quelconque des revendications précédentes,
**caractérisé en ce**
**que** la plaque d'émission de lumière ou les plaques d'émission de lumière (9; 109) ou la face d'émission ou les faces d'émission (9b) de ces dernières présentent une couleur, qui est similaire à la couleur des parties adjacentes de l'ensemble d'éclairage et/ou du dispositif de support (3 ; 104) et/ou du réflecteur (7 ; 106) et/ou du boîtier (26 ; 114) ou correspond essentiellement à cette dernière, et/ou présentent une couleur blanche.

5. Ensemble d'éclairage selon l'une quelconque des revendications précédentes,
**caractérisé en ce**
**que** la lumière rayonnée par la plaque d'émission de lumière ou les plaques d'émission de lumière (9) présente une couleur différente de la lumière de la première source de lumière, en particulier une couleur bleue ou une couleur tirant sur le bleu.

6. Ensemble d'éclairage selon l'une quelconque des revendications précédentes,
**caractérisé en ce**
**que** la lumière de l'autre source de lumière (14) pour l'éclairage d'accentuation et/ou le matériau ou une couche de matériau de la plaque d'émission de lumière ou des plaques d'émission de lumière (9) ou de l'autre source de lumière (14) pour l'éclairage d'accentuation présente/présentent une couleur divergeant d'une couleur approximativement blanche.
